# EUROPEAN PATENT SPECIFICATION

(11) **EP 3 005 501 B1**
(45) Date of publication and mention of the grant of the patent: **29.11.2017**
(21) Application number: 14730962.9
(22) Date of filing: 04.06.2014
(51) Int. Cl.: H02G 3/04, H02G 1/16

(54) **METHODS OF PROTECTING OR REPAIRING A CABLE OR CABLES AND RELATED APPARATUS**
VERFAHREN ZUM SCHUTZ ODER ZUR REPARATUR EINES ODER MEHRERER KABEL UND ZUGEHÖRIGE VORRICHTUNG
PROCÉDÉS DE PROTECTION OU DE RÉPARATION D'UN OU DE PLUSIEURS CÂBLES ET APPAREIL ASSOCIÉ

(30) Priority: 07.06.2013 GB 201310141
(43) Date of publication of application: 13.04.2016
(73) Proprietor: RTL Materials Ltd, Lymington, Hampshire SO41 8JY (GB)
(72) Inventor: DATON-LOVETT, Andrew James, Lymington Hampshire SO41 8JY (GB)
(74) Representative: Beck Greener
(86) International application number: PCT/GB2014/051731
(87) International publication number: WO 2014/195707

(56) References cited:
- WO-A1-97/35706

## Description

The present invention relates to methods of protecting a cable or cables, methods of repairing a cable or cables, to a sleeve and to a cable or cables in combination with a sleeve. Cables have multifarious uses, including carrying electrical current, transmitting light, or just applying a tensile force. It is generally desirable in many instances to protect the cable from damage or the environment. Many cables are manufactured to incorporate a protective layer, e.g. electrical cables may have a plastic coating which protects and insulates the conductive elements. However, it may be desirable to apply further protection after the point of manufacture to protect or repair one cable or more cables by applying a protective sleeve around the outside of the cable or cables. This can be used for example to protect the cable from abrasion, impact, provide electrical, thermal or other insulation, or just to secure multiple cables together. Moreover, it may be desirable to apply the sleeve to the cable at the point where the cable is in end use or after it is assembled as part of a larger apparatus. The problem arises of how to apply the sleeve to the cable, particularly in the case where the cable is particularly long or the cable is inaccessible in use. It is also generally desirable for the sleeve to be securely applied to the cable so that it stays in place during normal use of the cable. It is also desirable in some instances the cable to bend with the sleeve applied during normal use of the cable.

Some known schemes include winding a strip in a spiral around the cable or feeding the cable through shrink wrap tubing before shrinking the tubing to the cable.

In other known examples, it is known to apply a slit tube sleeve to the cable, passing the cable through the slit in the sleeve. Such sleeves are typically made from a polymer, which gives enough flexibility to allow the sleeve to open to receive the cable. Interlocking of the edges may be used to help secure the sleeve on the cable.

The present invention aims to provide improved ways of protecting or repairing a cable or cables.

According to a first aspect of the present invention, there is provided a method of protecting a cable or cables, the method comprising:
uncoiling a protective sleeve and forming the sleeve around a length of the cable or cables,
wherein the sleeve comprises a fibre-reinforced composite body which has an extended form in which it is resiliently biased in the form of an elongate tube having a slit along its length by which the sleeve can be opened to receive the cable or cables so that the sleeve self forms around the cable or cables due to its resilience, wherein when coiled the sleeve is opened out at the slit to assume a flattened cross section, wherein the hoop modulus and the axial modulus of the sleeve are selected to allow the sleeve to self-form around the cable or cables and stay in place while being able to follow bending of the cable or cables. The use of fibre reinforces composite sleeve allow the properties of the sleeve to be manipulated to "self form" around the cable or cables due to its resiliency in the slit tube shape. The sleeve has an appropriate hoop modulus such that it naturally forms a tube that generally matches the shape of the underlying cable or cables. At the same time, the sleeve is given flexibility in the longitudinal direction allowing the sleeve to bend sufficiently according to the preferred implementation with the allowable bending of the cable. The sleeve is opened at the slit to allow cable to pass through the gap. This means that the sleeve can be applied without passing it over the end of the cable which is an important advantage where the ends of the cable are difficult to access. Thus, the sleeve can securely stay in place on the cable, possibly with the help of a mastic or adhesive applied between the cable and sleeve. At the same time, when not applied to the cable, the sleeve can be opened out at the slit until flat or relatively flat and wound about an axis extending transversely to the longitudinal extent of the member, allowing the sleeve to be coiled for storage, transportation, etc. This is particularly advantageous for long lengths of cable where a single long length of sleeve can be used to protect the cable, which can still have a much smaller volume initially in its coiled form. In embodiments, the length of the sleeve when extended can be greater than 10m, or 100m, or more.

This arrangement is superior to prior art sleeves made for example from a polymer because these lack the structural properties achieved by use of fibre reinforced composites, which allow the sleeve to both be coiled and to self form around the cable. A polymer sleeve for example suffers from creep, meaning that if the sleeve were opened out and coiled, it would effectively end up being flat or at least loose its slit tube shape and therefore lose its effectiveness in self forming around a cable.

In various embodiments, the cable can take many different forms. The cable may be a wire rope or other tensile element, which is used, for example, for lifting, hauling, and towing or conveying force through tension. Alternatively or additionally, the cable may be are used to carry electric currents via one or more electrical conductor elements. Alternatively or additionally, the cable may be an optical cable containing one or more optical fibres in a protective jacket that supports the fibres. The sleeve may be used to bundle together several individual cables. The sleeve can be applied to cables of varying sizes and carrying capacities, e.g. to bundle together cables of domestic electrical appliances, or to form a protective sheath over high voltage power cables used to deliver electricity across large distances.

In an embodiment, the method comprising: progressively uncoiling the sleeve and forming it along the length of the cable or cables. Thus, the sleeve can be compactly stored and transported to where it is to be applied to a cable, at which point it can be progressively unwound and applied along the cable.

Preferably the fibre-reinforced composite comprises fibres that are aligned to achieve the resiliently biased form in the shape of a slit tube. By giving an appropriate alignment and positioning to the fibres when manufacturing the sleeve, the properties of the sleeve can be carefully controlled to suit the intended application. The hoop and tensile modulus of the sleeve are selected to control the properties of the sleeve when applied to the cable, to allow the sleeve to self form around the cable and stay in place, and in embodiments to also allow a degree of bending of the cable and/or provide resistance to bending to the cable.

In an embodiment, the sleeve is a bistable member, having a first stable form in said slit tube shape, and a second stable form in which it is coiled. The bistable member has a stable form when coiled, meaning that it is easier and safer to keep the sleeve in its coiled form. Otherwise, the tendency of the sleeve might be to spontaneously uncoil, requiring some form of housing to prevent this.

Preferably the sleeve provides any one or combination of:
repair of damage;
corrosion protection;
electrical insulation;
abrasion resistance;
impact resistance; and
protection from ice accumulation to the cable or cables. The sleeve has sufficient hoop modulus to self form around the cable or cables. The sleeve has sufficient longitudinal modulus to form to the cable or cables whilst the cable or cables bends. As will be appreciated, the degree of bending required depends on what the cable is to be used for. The properties of the sleeve can be selected in accordance.

The method may comprise applying a mastic or adhesive to bond the sleeve to the cable or cables and/or bond together the longitudinal edges of the slit tube. This can help retain the sleeve in place on a cable. This can allow a higher degree of bending of the cable without the sleeve detaching from the cable than would be possible due to the hoop modulus of the sleeve alone.

In an embodiment, at least one pocket of mastic or adhesive is attached to the inner surface of the sleeve, the method comprising applying pressure to the outer surface of the sleeve when applied to the cable or cables such that the pocket ruptures and delivers mastic or adhesive to a selected area. This provides a convenient way of applying the mastic or adhesive to the required areas.

The pocket may have at least one weak portion in a predetermined location that is designed to rupture when the pressure is applied, so as to control the location in which the mastic or adhesive is applied. This can allow for example one or more pockets to evenly distribute mastic or adhesive in the space all around the sleeve between the sleeve and cable.

The method may comprise applying a filler between the sleeve and the cable or cables where the density of the filler is chosen to achieve a predetermined buoyancy of the cable or cables and the sleeve. In marine or aquatic applications, this may be beneficial in helping control the position of the cable or cables.

In an embodiment, the longitudinal edges of the slit tube overlap. One or more pockets of adhesive may be used to seal the overlapping edges.

In an embodiment, the method comprises controlling the bend radius of the cable or cables under an expected load by applying a sleeve having predetermined bending stiffness to a portion of the cable or cables.

A second sleeve may be applied over a first portion of the first sleeve but not over a second portion of the first sleeve so that the bend radius of the cable or cables under the first portion is different from the bend radius of the cable or cables under the second portion under a bending load.

According to a second aspect of the present invention, there is provided a method of repairing a cable or cables, comprising applying a sleeve to a cable or cables according to any preceding claim over a damaged area.

In embodiments, the sleeve is applied to the cable or cables whilst the cable or cables is deployed.

In an embodiment the cable or cables is a marine seismic data acquisition cable. The sleeve may be applied to the cable or cables aboard a marine vessel. Thus, the marine cable can be repaired in situ, obviating downtime in removing cables for repair. The cable or cables may be spooled between two drums, wherein the sleeve is applied to the length of cable or cables extending between the drums. This provides a convenient way of applying the sleeve to a length of cable in situ.

According to a third aspect of the present invention, there is provided a cable or cables having a protective sleeve formed around a length of the cable or cables, wherein the sleeve comprises a fibre-reinforced composite body which has an extended form in which it is resiliently biased in the form of an elongate tube having a slit along its length by which the sleeve can be opened to receive the cable or cables so that the sleeve self forms around the cable or cables due to its resilience, wherein the sleeve can be opened out at the slit to assume a flattened cross section so that it can be coiled when not applied to the cable or cables, wherein the hoop modulus and the axial modulus of the sleeve are selected to allow the sleeve to self-form around the cable or cables and stay in place while being able to follow bending of the cable or cables. According to a fourth aspect of the present invention, there is provided a sleeve comprising a fibre-reinforced composite body which has an extended form in which it is resiliently biased in the form of an elongate tube having a slit along its length by which the sleeve can be opened to receive the cable or cables so that the sleeve self forms around the cable or cables due to its resilience, wherein the sleeve can be opened out at the slit to assume a flattened cross section so that it can be coiled when not applied to the structure, wherein the hoop modulus and the axial modulus of the sleeve are selected to allow the sleeve to self-form around the cable or cables and stay in place while being able to follow bending of the cable or cables. Embodiments of the present invention will now be described by way of example with reference to the accompanying drawings, in which:
Figure 1 shows an example of a sleeve 1 according to an embodiment of the present invention;
Figures 2 and 3 show in cross section examples of a sleeve 1 applied to a cable 10;
Figure 4 shows an example of a sleeve 1 used in a marine seismic data acquisition cable system;
Figures 5 and 6 show further examples of marine seismic data acquisition cable systems;
Figure 7 shows a dispenser for applying a sleeve to a cable;
Figure 8 shows an example of a guide member which can be used with the dispenser of Figure 7;
Figures 9 and 10 show examples of sleeves having pockets of adhesive or mastic attached to their inner surface;
Figures 11 and 12 show examples of using sleeves to control the bending radius of a cable; and,
Figure 13 shows another example of a sleeve formed to a cable.

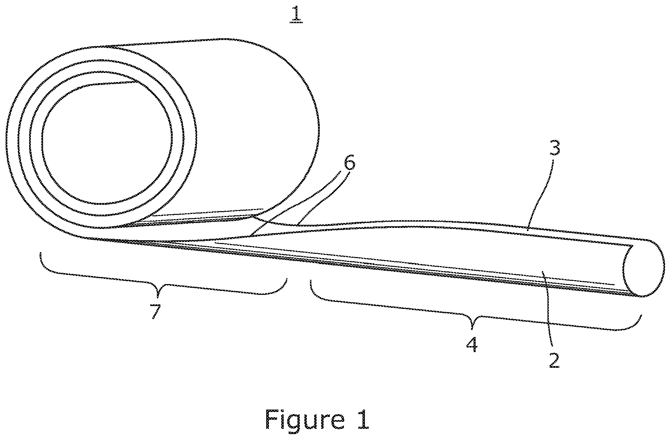

Figure 1 shows an example of a sleeve 1 according to an embodiment of the present invention. In Figure 1, the sleeve 1 is not yet applied to a cable or assembly of cables (hereinafter referred to as just a cable without loss of generality).

The sleeve 1 comprises a fibre-reinforced composite body having a stable form in the shape of an elongate slit tube so as to self form around the cable. The sleeve 1 can be opened out to be substantially flat so that it can be coiled when not applied to the cable or cables.

Use of a fibre-reinforced composite means that the structural properties can be manipulated so that the sleeve is adapted to both self form around a cable and to be opened out flat when coiled. The fibre-reinforced composite comprises fibres which may be positioned and aligned so as to achieve a stable form in the shape of a slit tube. The sleeve 1 has sufficient hoop modulus to self form around the cable. The sleeve 1 preferably has sufficient longitudinal modulus to form to the cable whilst the cable bends to allow the expected bending range of the cable in use. Preferably the sleeve can self form to the cable whilst allowing a radius of bending of 10d, or more preferably 5d, or less, where d is the diameter of the slit tube in the bending direction.

The sleeve 1 may be a bistable member, having a first stable form in an extended form in which it has said slit tube shape, and a second stable form in which it is longitudinally curved having a flat cross section so that it can be coiled. Examples of bistable coilable members are disclosed in the Applicant's US6217975 the entire contents of which are hereby incorporated by reference. Conventional methods can be used to make the composite or bistable member. Advantageous mechanised production methods of making a composite member are disclosed in the Applicant's GB1301637.3 filed 30 January 2013. Using a bistable member in this way means that the coiled sleeve is stable, meaning that it is easier to handle and store, etc.

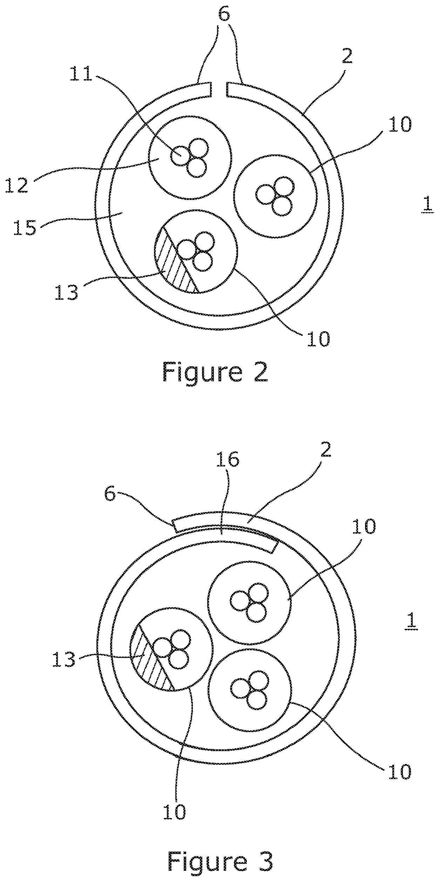

Figure 2 shows a sleeve 1 applied to a cable 10 comprising 3 cables each having plural conductors 11 encased in a protective layer 12 such as an insulating layer. The sleeve 1 can be used with many different forms of cable or cables 10, such as having more or fewer conductors, electrical or optical conductors, or even no conductors at all, and or where the cable 10 is used as a tensioning element.

Preferably, the sleeve 1 provides any one or combination of electrical insulation, abrasion resistance, impact resistance and protection from ice accumulation to the cable or cables, or just helps secure together a bundle of cables 10 to protect against tangling etc. The sleeve 1 may also protect the cable 10 from corrosion and may preferably be corrosion resistant itself.

The sleeve 1 can also allow areas of damage 13 to the protective layer 12 to be repaired.

Alternatively or additionally the sleeve 1 can incorporate an attachment element allowing the cable 10 to be attached at that point.

As shown in Figure 2, the edges 6 of the sleeve 1 preferably substantially meet to form a full shield around the cable 10. A mastic or filler 15 can be applied between the cables 10 and the sleeve 1 to help secure the sleeve in place. The mastic 15 can also be used to control the buoyancy of the cable 10 by selecting its density which may be useful in marine applications in making the cable sink or float, etc. Alternatively as shown in Figure 3, the edges 6 of the sleeve 1 may overlap. An adhesive or heat gun may be used in addition or alternative to using mastic 15 to secure the edges together to help secure the sleeve 1 in position.

In the case where the cable 10 has a damaged outer layer/coating, the sleeve 1 can be used to protect against ingress of water or other fluids that might migrate along the cable through the damaged section.

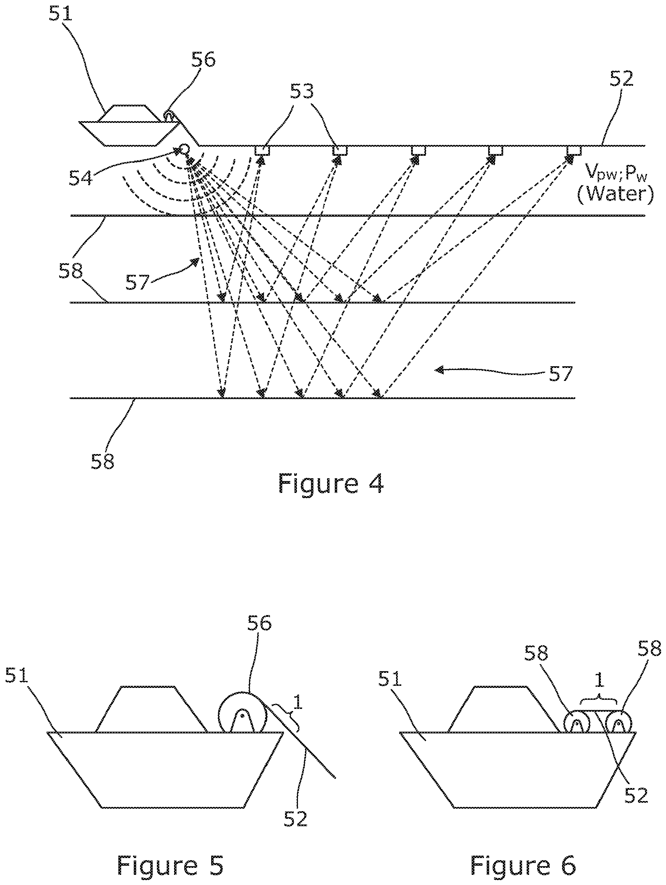

One example where it is beneficial to protect a cable 10 is in marine seismic data acquisition cable systems. Seismic vessels 51 are ships that are solely used for the purpose of seismic survey in the high seas and oceans. A seismic vessel 51 is used as a survey vessel for the purpose of pinpointing and locating the best possible area for oil drilling in the middle of the oceans. Traditional marine seismic surveys are conducted using specially-equipped vessels 51 that tow one or more cables 52 containing a series of hydrophones 53 at constant intervals (see Figure 4). The cables 52 are known as streamers, with 2D surveys using only one streamer and 3D surveys employing up to 12 or more (though 6 or 8 is more common) fanning out from behind the vessel 51. The streamers 52 are deployed just beneath the surface of the water and are at a set distance away from the vessel 51. The seismic source 54, usually an airgun, is also deployed underneath the surface of the water and is located between the vessel 51 and the first receiver 54. Each streamer 52 can be up to 8 km long or more, containing hundreds of hydrophones. As the seismic source 54 is fired, reflections 57 from the sea bed and strata 58 are detected by the hydrophones 53 in the streamers 52.

These seismic survey cables 52 typically consist of hundreds of strands of wire and tens of fibre optic strands encased in a plastic coating. The plastic coating is prone to damage when deployed and when being reeled onto and off of storage drums 56 at the back of the boat. The cables 52 are currently impractical to repair in the field. As a result, the cables 52 are either shipped back to the manufacturers for repair, which leads to the survey vessel being out of use for a significant period, or else the cables 52 are simply used to destruction and then discarded.

In the present embodiment, a sleeve 1 according to the present invention can be used to repair the cable 52 in the field. Coiled sleeves 1 can be stored on the vessel 51 until needed. When a cable 52 gets damaged, the sleeve 1 can be applied to the damaged section of cable 52. A mastic or adhesive can be applied between the cable and sleeve 1 or between the edges of the sleeve to join the slit in the tube. This can help secure the sleeve 1 to the cable 10. Typically the cables 52 are oily/dirty and do not lend themselves well to adhesion. Nonetheless, applying mastic means sufficient friction is built up between the cable 52 and the mastic to prevent the sleeve 1 from moving during deployment or when wound on the drum 56.

The sleeve 1 can be applied as the cable 52 is wound on or off of the drum 56 at the back of the vessel 51 to a damaged section as shown in Figure 5. Alternatively, a pair of drums 56 can be mounted to the deck of the vessel 51 and the cable 52 wound from one drum to the other such that the portion of cable 52 extending between the drums can be repaired by applying the sleeve 1.

Thus, the sleeve 1 repairs the damaged section of cable 52 whilst giving sufficient flexibility to allow the cable to be wound on to the drum. The sleeve 1 may be stored in a coiled form until needed, and may be applied progressively along the damaged length of cable 52. This much simplifies repairing the cable 52 in the field, or when transported back to a manufacturing/repair facility.

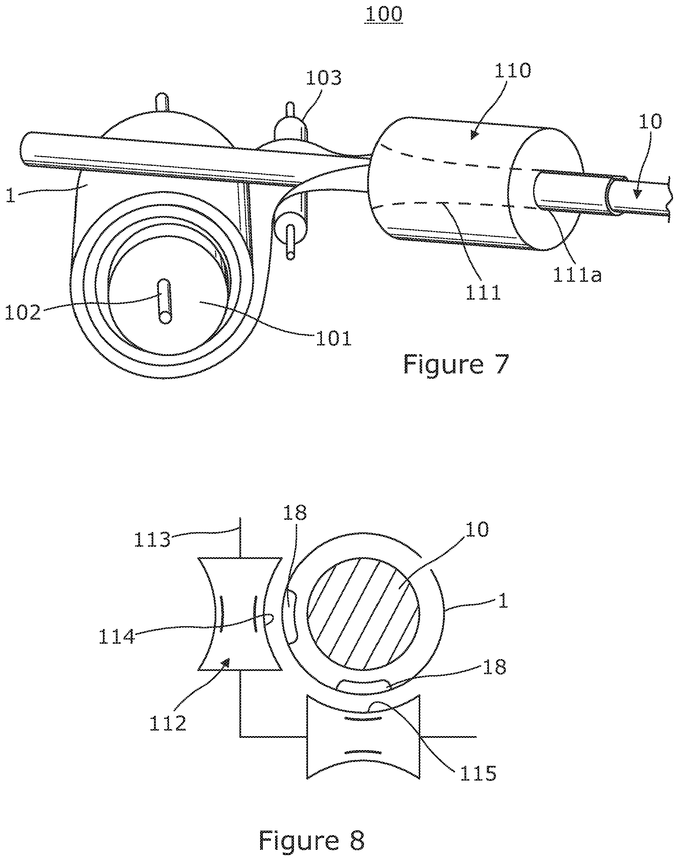

A dispenser 100 may be provided to help dispense and apply the sleeve 1. As shown in Figure 7, the dispenser 100 may comprise a reel 101 rotatably mounted via an axis 102 to a suitable housing or support structure (not shown in Figure 7 for clarity), allowing the dispenser to be handled when applying the sleeve 1 to the underlying cable 10 as the sleeve 1 unwinds from the reel 101. Other rollers 103 or guide members may also be used to help guide the sleeve 1.

Additionally or alternatively, the dispenser 100 has a guide device 110 arranged to guide the sleeve 1 and help form the sleeve 1 around the cable 10 as it unwinds. The guide device 110 may also be mounted to the housing or support structure. In the example of Figure 7, the guide device 110 comprises a hopper, having an tapering internal profile 110 which helps guide the sleeve 1 from the flat form in which it comes off the reel 101 to the extended form in which it forms around the cable 10. Thus, preferably, the end part 111a of the profile generally matches the cross sectional shape of the cable 10. Thus, with a generally circular cable 10, the exit part of the profile 111a is also generally circular. Preferably the guide device 110 is slit such that the cable 10 can pass through the slit so that the guide device 110 and thus dispenser 100 can engaged/disengaged from the cable 10.

Figure 8 shows another example of a guide device 110 which comprises two rollers 112 rotatably mounted to the housing via pivots 113. The rollers 112 are preferably shaped to match the cross sectional shape of the cable. Thus, with the circular cross section of the cable 10 of Figure 7, the rollers 112 have an arcuate rotated profile 114. The number and positioning of the rollers 112 can be varied as desired around some or the entire periphery of the sleeve 1.

The sleeve 1 may have pockets 115 of mastic or adhesive or similar bonding or filling substances disposed at desired positions around their inner surface. When the sleeve is formed around the cable 10 and pressure is applied to the sleeve 1, the pockets rupture, releasing the mastic or adhesive between the sleeve 1 and the cable, thereby bonding or filling the gap between the sleeve 1 and cable 10. The guide features of the guide device 110, e.g. the end profile 111a or rollers 112, may be arranged to compress the sleeve 1 against the cable 10 so as to burst the pockets 115. Alternatively, this could be performed manually or via a separate tool.

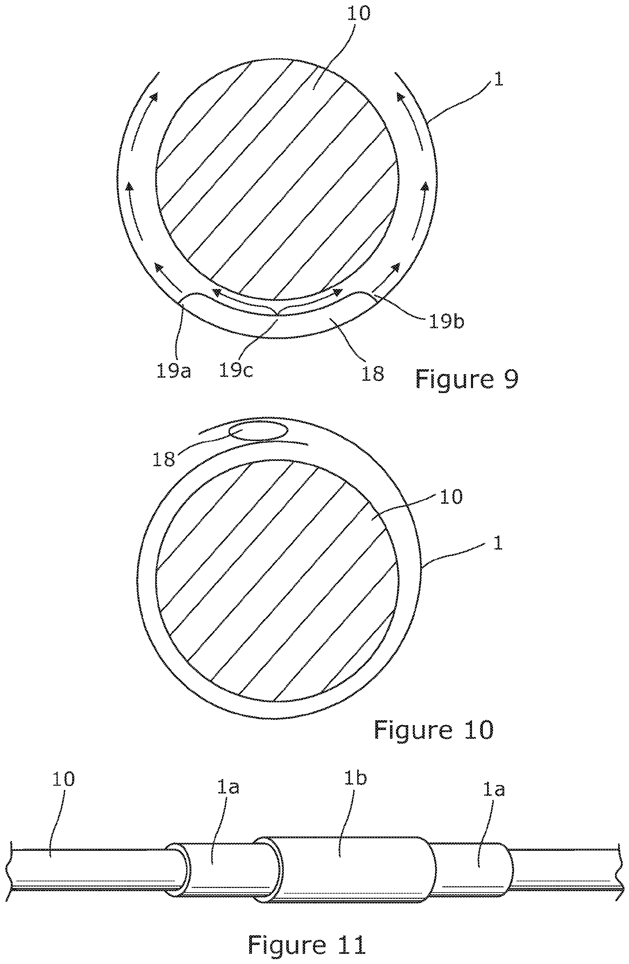

As will be appreciated, the number and positioning of the pockets 115 and or the way in which the pockets 115 are arranged to rupture can be selected in advance to control the way in which the mastic or adhesive is required to fill the void between the sleeve and cable 10. For example, as shown in Figure 9, a single pocket 115 is provided which is arranged to rupture at both ends so as to provide mastic to the portions of the sleeve 1 to the sides of the pocket 115 (illustrated by arrows 19a, 19b), as well as centrally to provide mastic to the area around the pocket 115 (illustrated by arrows 19c).

As shown by Figure 10, if it is desired to seal the sides 6 of the sleeve 1 to create a tube, a pocket 18 may be attached adjacent one or both sides 6 of the sleeve 1 in the area of the overlap of the sides 6 of the sleeve, so that when pressure is applied, the pocket 18 ruptures and releases adhesive to bond together the sides 6.

Many different arrangements of pocket 18 and methods of applying the sleeve to rupture the pockets 18 can be used according to the application.

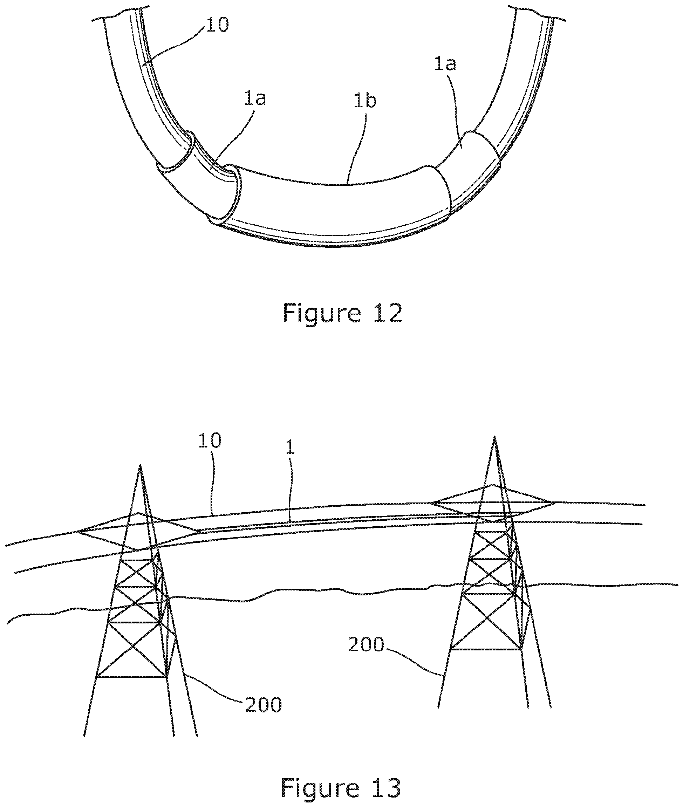

One or more sleeves 1 can also be used to provide strain relief or bending control to a cable 10. In the example shown by Figures 11 and 12, a first sleeve 1a is applied along a length of the cable 10. As will be appreciated, the sleeve 1a gives additional stiffness to the underlying cable 10 and thus protects against excessive strain or bending. The properties of the sleeve 1a can be chosen to achieve a desired degree of protection. As shown in Figure 11, one or more additional sleeves 1b may be applied over a portion of the first sleeve 1a in order to locally provide additional protection against excessive strain or bending. Thus, by layering plural sleeves 1 along the cable 10, the degree of bending along the cable can be controlled so that the minimum bend radius is not reached. By controlling the size and positioning of the various layers of sleeves 1a, 1b, the bending stiffness along the cable 10 and thus the bending radius under selected operating conditions can be controlled as desired using sleeves 1a, 1b that themselves are homogenous in their bending stiffness along their length.

Figure 13 shows another example in which the sleeve 1 can be used to shield a cable 10. In this example, the sleeve 1 is applied to a power cable 10 suspended by pylons or the like. It is know for example that in desert conditions, the action of sand carried by the wind can cause erosion of the power cable 10. Sand can eventually form a "cake" around the cable, which weighs down the cable, leading to damage and breakages, etc. A sleeve 1 can be deployed to help protect the cable 10 and such that the outer surface of the cable provides protection against erosion from sand. Similarly, a sleeve 1 can be applied in cold weather conditions where the outer surface prevents formation of ice, which might similarly weigh down and damage the cable 10. The sleeve 1 can also be made to be electrically insulating. As will be appreciated, this can be applied in situ, simply and possibly utilising a tool, which is of key importance where workers are required to work in potentially hazardous surroundings.

Embodiments of the present invention have been described with particular reference to the example illustrated. However, it will be appreciated that variations and modifications may be made to the examples described within the scope of the present invention.

## Claims

1. A method of protecting a cable or cables (10), the method comprising:
uncoiling a protective sleeve (1) and forming the sleeve around a length of the cable or cables (10),
wherein the sleeve (1) comprises a fibre-reinforced composite body (2) which has an extended form (4) in which it is resiliently biased in the form of an elongate tube having a slit along its length by which the sleeve can be opened to receive the cable or cables so that the sleeve self-forms around the cable or cables due to its resilience, wherein when coiled (5) the sleeve is opened out at the slit to assume a flattened cross section, wherein the hoop modulus and axial modulus of the sleeve are selected to allow the sleeve to self-form around the cable or cables and stay in place whilst being able to follow bending of the cable or cables.

2. A method according to claim 1, the method comprising:
progressively uncoiling the sleeve (1) and forming it around the length of the cable or cables.

3. A method according to claim 1 or claim 2, wherein the fibre-reinforced composite comprises fibres that are aligned to achieve the resiliently biased form in the shape of a slit tube and to achieve the required hoop and axial modulus.

4. A method according to any preceding claim, wherein the sleeve (1) is a bistable member, having a first stable form in said slit tube shape, and a second stable form in which it is coiled.

5. A method according to any preceding claim, wherein the sleeve (1) provides any one or combination of:
repair of damage;
corrosion protection;
electrical insulation;
abrasion resistance;
impact resistance; and
protection from ice accumulation
to the cable or cables.

6. A method according to any preceding claim, wherein the longitudinal edges (6) of the slit tube overlap.

7. A method according to any preceding claim, comprising applying a mastic (15) or adhesive to bond the sleeve (1) to the cable or cables (10) and/or bond together the longitudinal edges (6) of the slit tube.

8. A method according to claim 7, wherein at least one pocket (18) of mastic or adhesive (16) is attached to the inner surface of the sleeve (1), the method comprising applying pressure to the outer surface of the sleeve when applied to the cable or cables such that the pocket ruptures and delivers mastic or adhesive to a selected area (9a-9c).

9. A method according to claim 8, wherein the pocket (18) has at least one weak portion in a predetermined location that is arranged to rupture when the pressure is applied, so as to control the location (9a-9c) in which the mastic or adhesive is applied.

10. A method according to any preceding claim, comprising applying a filler between the sleeve (1) and the cable or cables (10) where the density of the filler is chosen to achieve a predetermined buoyancy of the cable or cables and the sleeve.

11. A method according to any preceding claim, comprising controlling the bend radius of cable or cables (10) under an expected load by applying a sleeve (1a) having predetermined bending stiffness to a portion of the cable or cables (10).

12. A method according to claim 11, comprising applying a second sleeve (1b) over a first portion of the first sleeve but not over a second portion of the first sleeve so that the bend radius of the cable or cables under the first portion is different from the bend radius of the cable or cables under the second portion under a bending load.

13. A method according to any preceding claim, comprising applying the sleeve to the cable or cables whilst the cable or cables is deployed.

14. A method according to any preceding claim, wherein the cable or each of the cables is a marine seismic data acquisition cable (52).

15. A cable or cables (10) having a protective sleeve (1) formed around a length of the cable or cables, wherein the sleeve comprises a fibre-reinforced composite body (2) which has an extended form in which it is resiliently biased in the form of an elongate tube (4) having a slit along its length by which the sleeve can be opened to receive the cable or cables so that the sleeve self-forms around the cable or cables due to its resilience, wherein the sleeve (1) can be opened out at the slit to assume a flattened cross section so that it can be coiled (5) when not applied to the cable or cables, wherein the hoop modulus and the axial modulus of the sleeve are selected to allow the sleeve to self-form around the cable or cables and stay in place whilst being able to follow bending of the cable or cables.

16. A sleeve (3) for protecting a cable or cables (10), the sleeve comprising a fibre-reinforced composite body (2) which has an extended form in which it is resiliently biased in the form of an elongate tube (4) having a slit along its length by which the sleeve can be opened to receive the cable or cables so that the sleeve self-forms around the cable or cables due to its resilience, wherein the sleeve can be opened out at the slit to assume a flattened cross section so that it can be coiled (5) when not applied to the cable or cables, wherein the hoop modulus and the axial modulus of the sleeve (1) are selected to allow the sleeve to self-form around the cable or cables (10) and stay in place whilst being able to follow bending of the cable or cables.

17. A sleeve according to claim 16, wherein the sleeve can self-form to the cable or cables whilst allowing a radius of bending of 10 x d or less, where d is the diameter of the slit tube.

18. A sleeve according to claim 16, wherein the sleeve has at least one pocket (18) attached to its inner surface, wherein the pocket contains mastic or adhesive (16), and wherein application of pressure to the outside of the sleeve when applied to the structure causes the pocket to burst so as to apply mastic or adhesive between the sleeve and cables and/or between two overlapping edges of the sleeve.

## Patentansprüche

1. Ein Verfahren zum Schützen eines Kabels oder von Kabeln (10), wobei das Verfahren Folgendes beinhaltet:
Abwickeln einer Schutzhülle (1) und Formen der Schutzhülle um eine Länge des Kabels oder der Kabeln (10),
wobei die Hülle (1) einen faserverstärkten Verbundstoffkörper (2) beinhaltet, der eine erweiterte Form (4) aufweist, in der er flexibel in Form einer länglichen Röhre vorgespannt ist, die entlang ihrer Länge einen Schlitz aufweist, durch den die Hülle geöffnet werden kann, um das Kabel oder die Kabel aufzunehmen, sodass die Hülle sich aufgrund ihrer Flexibilität selbst um das Kabel oder die Kabel formt, wobei die Hülle, wenn aufgewickelt (5), am Schlitz ausgebreitet ist, um einen abgeflachten Querschnitt anzunehmen, wobei das Ringzugmodul und Axialmodul der Hülle ausgewählt sind, um zu erlauben, dass die Hülle sich selbst um das Kabel oder die Kabel formt und an ihrem Platz bleibt, während sie dem Biegen des Kabels oder der Kabeln folgen kann.

2. Verfahren gemäß Anspruch 1, wobei das Verfahren Folgendes beinhaltet:
schrittweises Abwickeln der Hülle (1) und Formen dieser um die Länge des Kabels oder der Kabeln.

3. Verfahren gemäß Anspruch 1 oder Anspruch 2, wobei der faserverstärkte Kunststoff Fasern beinhaltet, die ausgerichtet sind, um die flexibel vorgespannte Form in Gestalt einer geschlitzten Röhre zu erzielen und um das erforderliche Ringzug- und Axialmodul zu erzielen.

4. Verfahren gemäß einem vorhergehenden Anspruch, wobei die Hülle (1) ein bistabiles Glied ist, das eine erste stabile Form in der geschlitzten Röhrengestalt und eine zweite stabile Form, in der sie aufgewickelt ist, aufweist.

5. Verfahren gemäß einem vorhergehenden Anspruch, wobei die Hülle (1) eines oder eine Kombination von Folgendem bereitstellt:
Reparatur von Schäden;
Korrosionsschutz;
elektrische Isolierung;
Abriebbeständigkeit;
Schlagbeständigkeit; und
Schutz gegen Eisakkumulation an dem Kabel oder den Kabeln.

6. Verfahren gemäß einem vorhergehenden Anspruch, wobei die Längskanten (6) der geschlitzten Röhre überlappen.

7. Verfahren gemäß einem vorhergehenden Anspruch, das das Aufbringen eines Mastix (15) oder eines Klebstoffs beinhaltet, um die Hülle (1) an das Kabel oder die Kabel (10) zu kleben und/oder die Längskanten (6) der geschlitzten Röhre zusammenzukleben.

8. Verfahren gemäß Anspruch 7, wobei mindestens eine Tasche (18) mit Mastix oder Klebstoff (16) an der Innenfläche der Hülle (1) angebracht ist, wobei das Verfahren das Aufbringen von Druck an der Außenfläche der Hülle beinhaltet, wenn an dem Kabel oder den Kabeln aufgebracht, sodass die Tasche aufreißt und Mastix oder Klebstoff an einen ausgewählten Bereich liefert (9a-9c).

9. Verfahren gemäß Anspruch 8, wobei die Tasche (18) mindestens einen schwachen Abschnitt in einer vorbestimmten Stelle aufweist, der eingerichtet ist, um aufzureißen, wenn der Druck aufgebracht wird, um so die Stelle (9a-9c) zu regeln, an der der Mastix oder Klebstoff aufgebracht wird.

10. Verfahren gemäß einem vorhergehenden Anspruch, das das Aufbringen eines Füllstoffs zwischen der Hülle (1) und dem Kabel oder den Kabeln (10) beinhaltet, wobei die Dichte des Füllstoffs ausgewählt wird, um einen vorbestimmten Auftrieb des Kabels oder der Kabeln und der Hülle zu erzielen.

11. Verfahren gemäß einem vorhergehenden Anspruch, das das Regeln des Biegeradius des Kabels oder der Kabeln (10) unter einer erwarteten Last durch Aufbringen einer Hülle (1a), die eine vorbestimmte Biegesteifigkeit aufweist, an einem Abschnitt des Kabels oder der Kabeln (10) beinhaltet.

12. Verfahren gemäß Anspruch 11, das das Aufbringen einer zweiten Hülle (1b) über einem ersten Abschnitt der ersten Hülle, aber nicht über einem zweiten Abschnitt der ersten Hülle, beinhaltet, sodass sich der Biegeradius des Kabels oder der Kabeln unter dem ersten Abschnitt vom Biegeradius des Kabels oder der Kabeln unter dem zweiten Abschnitt unter einer Biegelast unterscheidet.

13. Verfahren gemäß einem vorhergehenden Anspruch, das das Aufbringen der Hülle an dem Kabel und den Kabeln beinhaltet, während das Kabel oder die Kabel eingesetzt ist/sind.

14. Verfahren gemäß einem vorhergehenden Anspruch, wobei das Kabel oder jedes der Kabeln ein Marineseismikdatenerfassungskabel (52) ist.

15. Ein Kabel oder Kabel (10), die eine Schutzhülle (1) aufweisen, die um eine Länge des Kabels oder der Kabeln geformt ist, wobei die Hülle einen faserverstärkten Verbundstoffkörper (2) beinhaltet, der eine erweiterte Form (4) aufweist, in der er flexibel in Form einer länglichen Röhre (4) vorgespannt ist, die entlang ihrer Länge einen Schlitz aufweist, durch den die Hülle geöffnet werden kann, um das Kabel oder die Kabel aufzunehmen, sodass die Hülle sich aufgrund ihrer Flexibilität selbst um das Kabel oder die Kabel formt, wobei die Hülle (1) am Schlitz ausgebreitet sein kann, um einen abgeflachten Querschnitt anzunehmen, sodass sie aufgewickelt (5) sein kann, wenn sie nicht an dem Kabel oder den Kabeln aufgebracht ist, wobei das Ringzugmodul und das Axialmodul der Hülle ausgewählt sind, um zu erlauben, dass die Hülle sich selbst um das Kabel oder die Kabel formt und an ihrem Platz bleibt, während sie dem Biegen des Kabels oder der Kabeln folgen kann.

16. Hülle (3) zum Schutz eines Kabels oder von Kabeln (10), wobei die Hülle einen faserverstärkten Verbundstoffkörper (2) beinhaltet, der eine erweiterte Form aufweist, in der er flexibel in Form einer länglichen Röhre (4) vorgespannt ist, die entlang ihrer Länge einen Schlitz aufweist, durch den die Hülle geöffnet werden kann, um das Kabel oder die Kabel aufzunehmen, sodass die Hülle sich aufgrund ihrer Flexibilität selbst um das Kabel oder die Kabel formt, wobei die Hülle am Schlitz ausgebreitet sein kann, um einen abgeflachten Querschnitt anzunehmen, sodass sie aufgewickelt (5) sein kann, wenn sie nicht an dem Kabel oder den Kabeln aufgebracht ist,
wobei das Ringzugmodul und das Axialmodul der Hülle ausgewählt sind, um zu erlauben, dass die Hülle sich selbst um das Kabel oder die Kabel (10) formt und an ihrem Platz bleibt, während sie dem Biegen des Kabels oder der Kabeln folgen kann.

17. Hülle gemäß Anspruch 16, wobei die Hülle sich an dem Kabel oder den Kabel selbst formen kann, während ein Biegeradius von 10 x d oder weniger erlaubt wird, wobei d der Durchmesser der geschlitzten Röhre ist.

18. Hülle gemäß Anspruch 16, wobei die Hülle mindestens eine Tasche (18) aufweist, die an ihrer Innenfläche angebracht ist, wobei die Tasche Mastix oder Klebstoff (16) enthält, und wobei Aufbringung von Druck an der Außenseite, wenn auf die Struktur aufgebracht, verursacht, dass die Tasche platzt, um so Mastix oder Klebstoff zwischen der Hülle und den Kabeln und/oder zwischen zwei überlappenden Kanten der Hülle aufzubringen.

## Revendications

1. Procédé de protection d'un câble ou de plusieurs câbles (10), ledit procédé comprenant : le déroulement d'un manchon de protection (1) et la formation du manchon autour d'une longueur du câble ou des câbles (10),
ledit manchon (1) comprenant un corps composite renforcé par des fibres (2) présentant une forme étendue (4), dans laquelle il est sollicité de manière élastique, sous la forme d'un tube allongé possédant une fente le long de sa longueur par laquelle le manchon peut être ouvert afin de recevoir le câble ou les câbles afin que le manchon se forme lui-même autour du câble ou des câbles en raison de son élasticité, une fois enroulé (5) le manchon est ouvert au niveau de la fente afin de présenter une section transversale aplatie, le module annulaire et le module axial du manchon étant sélectionnés
pour permettre au manchon de se former lui-même autour du câble ou
des câbles et de rester en place tout en étant capable de suivre la courbure du câble ou
des câbles.

2. Procédé selon la revendication 1, ledit procédé comprenant : le déroulement de manière progressive du manchon (1) et la formation de celui-ci autour de la longueur du câble ou des câbles.

3. Procédé selon la revendication 1 ou 2, ledit composite renforcé par des fibres comprenant des fibres alignées pour obtenir la forme sollicitée de manière élastique sous la forme d'un tube fendu et pour atteindre les modules annulaire et axial requis.

4. Procédé selon l'une quelconque des revendications précédentes, ledit manchon (1) étant un élément bistable, possédant une première forme stable sous ladite forme de tube fendu et une seconde forme stable dans laquelle il est enroulé.

5. Procédé selon l'une quelconque des revendications précédentes, ledit manchon (1) offrant l'un quelconque ou une combinaison de :
une réparation de dommage ; une protection contre la corrosion ; une isolation électrique ; une résistance à l'abrasion ; une résistance aux chocs ; et une protection contre l'accumulation de glace pour le câble ou les câbles.

6. Procédé selon l'une quelconque des revendications précédentes, lesdits bords longitudinaux (6) du tube fendu se chevauchant.

7. Procédé selon l'une quelconque des revendications précédentes, comprenant l'application d'un mastic (15) ou d'adhésif pour coller le manchon (1) au câble ou aux câbles (10) et/ou coller ensemble les bords longitudinaux (6) du tube fendu.

8. Procédé selon la revendication 7, au moins une poche (18) de mastic ou d'adhésif (16) étant fixée à la surface interne du manchon (1), ledit procédé comprenant l'application d'une pression à la surface externe du manchon lorsque celui-ci est appliqué au câble ou aux câbles de sorte que la poche se rompt et livre le mastic ou l'adhésif au niveau d'une zone sélectionnée (9a à 9c).

9. Procédé selon la revendication 8, ladite poche (18) possédant au moins une partie faible dans un emplacement prédéfini agencé pour se rompre lorsque la pression est appliquée de façon contrôler à l'emplacement (9a - 9c) au niveau duquel le mastic ou l'adhésif est appliqué.

10. Procédé selon l'une quelconque des revendications précédentes, comprenant l'application d'une charge entre le manchon (1) et le câble ou les câbles (10), ladite densité de la charge étant choisie pour atteindre une flottabilité prédéfinie du câble ou des câbles et du manchon.

11. Procédé selon l'une quelconque des revendications précédentes, comprenant la régulation du rayon de courbure du câble ou des câbles (10) sous une charge attendue en appliquant un manchon (1a), possédant une rigidité en flexion prédéfinie, à une partie du câble ou des câbles (10).

12. Procédé selon la revendication 11, comprenant l'application d'un second manchon (1b) sur une première partie du premier manchon mais pas sur une seconde partie du premier manchon afin que le rayon de courbure du câble ou des câbles au niveau de la première partie soit différent du rayon de courbure du câble ou des câbles au niveau de la seconde partie sous une charge de flexion.

13. Procédé selon l'une quelconque des revendications précédentes, comprenant l'application du manchon au câble ou aux câbles alors que le câble ou les câbles sont déployés.

14. Procédé selon l'une quelconque des revendications précédentes, ledit câble ou chacun desdits câbles étant un câble d'acquisition de données sismiques marin (52).

15. Câble ou câbles (10) possédant un manchon de protection (1) formé autour d'une longueur du câble ou des câbles, ledit manchon comprenant un corps composite renforcé par des fibres (2) présentant une forme étendue dans laquelle il est sollicité de manière élastique sous la forme d'un tube allongé (4) possédant une fente le long de sa longueur par laquelle le manchon peut être ouvert pour recevoir le câble ou les câbles afin que le manchon se forme lui-même autour du câble ou des câbles en raison de son élasticité, ledit manchon (1) pouvant être ouvert au niveau de la fente pour présenter une section transversale aplatie afin qu'il puisse être enroulé (5) lorsqu'il n'est pas appliqué au câble ou aux câbles, ledit module annulaire et ledit module axial du manchon étant sélectionnés
pour permettre au manchon de se former lui-même autour du câble ou
des câbles et de rester en place tout en étant capable de suivre la courbure du câble ou
des câbles.

16. Manchon (3) destiné à protéger un câble ou des câbles (10), ledit manchon comprenant un corps composite (2) renforcé par des fibres présentant une forme étendue selon laquelle il est sollicité de manière élastique sous la forme d'un tube allongé (4) possédant une fente le long de sa longueur par laquelle le manchon peut être ouvert pour recevoir le câble ou les câbles afin que le manchon se forme lui-même autour du câble ou des câbles en raison de son élasticité, ledit manchon pouvant être ouvert au niveau de la fente pour présenter une section transversale aplatie afin qu'il puisse être enroulé (5) lorsqu'il n'est pas appliqué au câble ou aux câbles,
ledit module annulaire et ledit module axial du manchon (1) étant sélectionnés pour permettre au manchon de se former lui-même autour du câble ou des câbles (10) et de rester en place tout en étant capable de suivre la courbure du câble ou des câbles.

17. Manchon selon la revendication 16, ledit manchon pouvant se former lui-même autour du câble ou des câbles tout en permettant un rayon de courbure inférieur ou égal à 10 x d, où d est le diamètre du tube fendu.

18. Manchon selon la revendication 16, ledit manchon possédant au moins une poche (18) fixée sur sa surface interne, ladite poche contenant un mastic ou un adhésif (16), et ladite application d'une pression sur l'extérieur du manchon lorsque ce dernier est appliqué à la structure entraînant l'éclatement de la poche de façon à appliquer le mastic ou l'adhésif entre le manchon et les câbles et/ou entre les deux bords du manchon qui se chevauchent.
